# FASCICULE DE BREVET EUROPEEN

(11) **EP 3 310 157 B1**
(45) Date de publication et mention de la délivrance du brevet: **11.09.2024**
(21) Numéro de dépôt: 16741080.2
(22) Date de dépôt: 14.06.2016
(51) Int. Cl.: A01K 1/035

(54) **COUSSIN POUR ANIMAUX DOMESTIQUES ET ENSEMBLE COMPOSÉ D'UN TEL COUSSIN ET D'UN BAC FORMANT REBORD**
HAUSTIERKISSEN UND ANORDNUNG MIT SOLCH EINEM KISSEN UND EINEM RANDBILDENDEN SCHALE
PET CUSHION AND ASSEMBLY COMPRISING SUCH A CUSHION AND A TRAY FORMING A RIM

(30) Priorité: 17.06.2015 FR 1555550
(43) Date de publication de la demande: 25.04.2018
(73) Titulaire: Hubler, Danièle, 67000 Strasbourg (FR); Hubler, Eric, 67000 Strasbourg (FR)
(72) Inventeur: Hubler, Danièle, 67000 Strasbourg (FR); Hubler, Eric, 67000 Strasbourg (FR)
(74) Mandataire: Cabinet Nuss
(86) Numéro de dépôt international: PCT/FR2016/051432
(87) Numéro de publication internationale: WO 2016/203145

(56) Documents cités:
- WO-A1-2015/076847
- CN-C- 100 496 580
- DE-A1- 3 929 343
- GB-A- 189 819 409
- GB-A- 317 890
- JP-A- 2009 240 449
- US-A- 5 320 066
- US-A- 69 376

## Description

La présente invention concerne le domaine des couchages pour animaux domestiques et plus particulièrement pour chiens et chats et a pour objet un coussin pour animaux domestiques. Elle a également pour objet un ensemble composé d'un tel coussin et d'une coque périphérique formant rebord.

On sait que les couchages pour animaux domestiques, notamment pour les chiens et les chats, se présentent sous la forme d'un coussin de forme généralement ronde, ovale ou rectangulaire permettant de leur procurer une surface de confort, posée à même le sol, pour se coucher et dormir. Ces couchages sont aussi communément connus sous les noms, par exemple, de matelas, couches ou lits.

De tels couchages sont constitués d'un remplissage qui constitue l'intérieur, le noyau ou l'âme du couchage et une housse ou enveloppe externe. La housse externe entoure et recouvre le remplissage pour le protéger et former une surface externe destinée à être en contact avec l'animal.

Le remplissage est généralement réalisé au moyen de mousse, latex, polyfil ou de billes de polystyrène. Le remplissage subit l'effet de l'écrasement ce qui engendre, à terme la perte de confort du couchage. Le remplissage au moyen des billes de polystyrène présent également de nombreux inconvénients. En effet, de telles billes se déforment sous la pression du poids de l'animal et perdent leur volume. En outre, ces billes produisent beaucoup de bruit lorsque le chien bouge sur le couchage, ce qui perturbe le chien lui-même ainsi que les personnes situées à proximité, notamment la nuit durant leur sommeil. Ces billes présentent une forme ronde et glissent les unes sur les autres de sorte que le couchage ne peut pas conserver, même provisoirement, la forme de l'empreinte imprimé par l'animal dans le couchage. D'autre part, les billes de polystyrène, du fait de leur transformation en styrène au cours du temps, ont des effets nocifs pour la santé.

On connaît également des coussins à mémoire de forme pour chiens ou chats dont le remplissage est réalisé à partir d'une mousse à mémoire de forme qui conserve la forme de l'animal, c'est-à-dire de l'empreinte façonnée ou imprimée par ce dernier dans le coussin. Toutefois, si ce type de couchage permet de soulager les articulations de l'animal, celui-ci perturbe son comportement, ses habitudes ou ses rites naturels. En effet, le chien ou le chat est habitué depuis ses origines, dans la nature, à façonner ou imprimer dans le sol, généralement de la terre, une empreinte dans laquelle il est calé sans que celle-ci n'exerce de contrainte ou d'enfoncement sur les parties de son corps et doit réagir à des stimuli nombreux et soudains le contraignant à changer de position, ce qui n'est pas ou difficilement possible avec ce type de couchage où l'animal est engoncé dans la mousse et ne lui permet pas de s'extraire sans effort du couchage. En outre, dans ce type de couchage à mémoire de forme, la matière, généralement du latex, nécessite un temps de réaction qui ne permet pas un façonnage instantané et naturel de l'empreinte où va se caler l'animal dans le coussin. En effet, la matière à mémoire de forme réagit à la chaleur du corps de l'animal et s'assouplit progressivement pour s'adapter à la morphologie et épouser les contours de l'animal.

Le document GB 19409 A a pour objet un coussin cousu comportant un remplissage de liège et étant particulièrement adapté pour la construction de matelas utilisés dans les hôpitaux, les baraques et les écoles ou pour les navires, par exemple en tant que dispositif de sauvetage. Il comprend en outre un renforcement des deux côtés principaux du matelas au moyen d'anneaux ou de disques de renfort.

Le document GB 317 890A a pour objet un matelas pour sommiers, sièges, coussins, gilet de sauvetage et plus particulièrement le remplissage qui est réalisé à partir de copeaux de liège qui ont été préalablement bouillis ou cuits à la vapeur afin de détruire les éventuels insectes, microbes ou tout autre vie.

Le document US 5,320,066 A a pour objet un matelas pour animaux domestiques, ledit matelas étant rempli de copeaux de cèdre ou autre matériau de rembourrage traité avec de l'huile de cèdre blanc en tant que répulsif contre les animaux.

Le document US 69376 A concerne un matelas ou coussin contenant des cheveux bouclés ou autre matériau élastique de remplissage équivalent combiné avec des copeaux de cèdre blanc de sorte à réduire le coût d'un remplissage contenant uniquement des cheveux bouclés, à apporter un matériau partiellement élastique et conférer, par l'odeur du cèdre blanc, un effet répulsif.

Le document WO 2015/076847 A1 concerne une mousse alvéolaire flexible pour matelas ou lits pour animaux contenant des particules de bois de cèdre ayant des propriétés aromatiques ou répulsives contre les insectes ou les odeurs.

Le document JP2 009240449 A concerne un remplissage pour la literie utilisant des plumes pour leurs excellentes propriétés de retenue de la chaleur et des copeaux de bois ayant des effets répulsifs contre les insectes.

Le document DE 39 29 343 A1 a pour objet un insert isolant pour une couverture ou un coussin pouvant servir dans un panier pour animaux. Il comporte un remplissage comprenant des granulés de liège procurant un effet répulsif contre les tiques et les puces.

Toutefois, les coussins ou matelas divulgués dans ces documents ne ne sont pas prévus pour permettre un façonnage instantané et naturel de l'empreinte où va se caler l'animal dans le coussin ou matelas et/ou ne permetttent pas de repousser les parasites, ou de manière insuffisante ou non efficace.

La présente invention a pour but de pallier ces inconvénients en proposant un coussin à la fois ergonomique et respectueux des rites naturels de l'animal et de sa santé et ne présentant pas les désagréments ou les risques des couchages actuels, ce tout en neutralisant ou en limitant l'imprégnation des odeurs de l'animal dans le coussin et en repoussant plus efficacement les parasites.

A cet effet, la présente invention a pour objet un coussin pour animaux domestiques selon la revendication 1, comprenant une housse externe formant une enveloppe externe prévue pour être en contact avec l'animal et une structure de remplissage entourée et recouverte totalement par ladite housse, se caractérisant essentiellement en ce que :
- la structure de remplissage comprend des granulés de liège répartis en vrac et présentant chacun un profil anguleux ou non lisse ou non rond permettant à l'animal de façonner naturellement et instantanément dans le coussin une empreinte provisoire adaptée à sa morphologie et à ses contours pour se caler dans cette dernière,
- la housse externe est perméable à l'air et la structure de remplissage comprend en outre des éléments répulsifs, tels que des billes de cèdre ou des granulés de cèdre, répartis en vrac avec les granulés de liège et capables d'exercer un effet répulsif contre les parasites,
et en ce que les granulés de liège sont aptes à coopérer, par effet de friction ou de frottement, avec lesdits éléments, lors des mouvements de l'animal sur le coussin, ladite coopération activant ou renforçant l'activation de leur effet répulsif.

La présente invention a encore pour objet un ensemble selon la revendication 9, composé d'un coussin et d'un bac formant rebord, ledit coussin étant défini selon la présente invention, se caractérisant essentiellement en ce que le bac comprend une paroi latérale définissant un espace interne et en ce que le coussin est disposé dans l'espace interne du bac de sorte que la paroi latérale de ce dernier forme un rebord périphérique audit coussin.

L'invention sera mieux comprise, grâce à la description ci-après, qui se rapporte à un mode de réalisation préféré, donné à titre d'exemple non limitatif, et expliqué avec référence aux dessins annexés montrant une vue en coupe transversale schématique d'un coussin selon la présente invention :
- la figure 1 montre une vue schématique et en coupe transversale d'un coussin selon la présente invention, dans une mode de réalisation préférentiel comprenant une housse externe et une housse interne,
- la figure 2 montre une vue schématique et en coupe transversale d'un ensemble composé d'un coussin tel que représenté sur la figure 1 et d'un bac formant rebord recevant ledit coussin.

Les figures montrent un coussin, selon la présente invention, pour animaux domestique comprenant une housse externe 1 formant une enveloppe externe prévue pour être en contact avec l'animal et une structure de remplissage 2, cette dernière étant entourée et recouverte totalement par ladite housse

Conformément à la présente invention, la structure de remplissage 2 comprend des granulés 3 de liège répartis en vrac et présentant chacun un profil anguleux ou non lisse ou non rond permettant à l'animal de façonner naturellement et instantanément dans le coussin une empreinte provisoire adaptée à sa morphologie et à ses contours pour se caler dans cette dernière.

On entendra par profil le contour ou la surface externe du granulé de liège.

La caractéristique relative au caractère anguleux ou non lisse, ou encore non rond, du profil de chaque granulé 3 ou grain de liège peut être obtenu par broyage du liège. Une telle caractéristique empêche les granulés 3 de glisser ou de rouler les uns sur les autres ou limite leur glissement ou leur roulement, par l'effet mécanique du contact de leurs arêtes ou angles 3a respectifs formé(e)s à la surface ou sur le profil des granulés 3 de liège. Cette caractéristique permet ainsi à l'animal de façonner ou d'imprimer naturellement, c'est-à-dire en respectant ses rites et ses habitudes naturels, et instantanément, c'est-à-dire sans nécessiter, à l'instar des coussins à mémoire de forme actuels, un temps de réaction à la chaleur du corps de l'animal, une empreinte provisoire dans le coussin nécessaire au confort de l'animal, tout en permettant un calage sans résistance ou pression sur les zones anguleuses du corps dudit animal.

Une telle structure de remplissage 2 selon la présente invention permet également à l'animal de s'extraire aisément, sans effort, et naturellement de l'empreinte ainsi façonnée.

De préférence, la densité des granulés 3 de liège peut être comprise entre 50 et 70 kg/m3, préférentiellement entre 55 et 65 kg/m3 et plus préférentiellement de l'ordre de 60 kg/m3. Les déposants ont constaté dans leurs essais que trop de granulés 3 de liège rend le coussin trop compact lui faisant perdre sa malléabilité et donc le confort recherché et que trop peu de granulés de liège provoque des zones vides, sans granulés, dans le couchage mettant l'animal en contact avec le sol ou la surface sur lequel ou laquelle repose le coussin, ce qui lui ôte tout son confort. La densité ou quantité de granulés 3 de liège préférentielle précitée permet d'offrir une ergonomie particulièrement satisfaisante et visible, procurant une malléabilité et un confort satisfaisants et empêchant la création de zones vides.

Les granulés 3 de liège peuvent avoir, de préférence, une granulométrie comprise entre 0,5 mm et 3,5 mm, préférentiellement entre 1 mm et 2 mm. Cette faible densité associée à une telle granulométrie permettent en particulier d'éviter la formation d'amas compacts et lourds de liège à l'intérieur du coussin, qui réduisent considérablement, voire anéantissent l'ergonomie du coussin ou du couchage. Dans ce spectre de granulométrie préférentiel, le caractère anguleux ou non lisse ou non rond des granulés 3 de liège permet d'optimiser le façonnage naturel et instantané de l'empreinte par l'animal.

Le choix du liège par les déposants répond à de nombreux critères, à savoir notamment que le liège (est) :
- écologique, recyclable,
   - un isolant thermique, permettant de résister aux grandes variations de température et de proposer une alternative naturelle aux coussins comportant des systèmes chauffants ou rafraichissants, et de rendre possible l'équilibre thermique de l'animal sans apport d'énergie extérieure,
   - régulateur de l'humidité (le liège est 100 % hydrophobe),
   - neutralise les odeurs de sorte qu'il n'emmagasine pas les odeurs de l'animal et forme un substitut naturel aux produits chimiques utilisés actuellement,
   - souple, léger, antistatique, non allergène, imputrescible, antifongique, antiparasitaire, antibactérien et antimicrobien, répulsif d'insecte, indéformable (ne se tasse pas dans le temps), résilient (reprend sa forme initiale après avoir été soumis à une pression),
   - exempt de produits nocifs pour la santé, sain pour l'environnement,
   - durabilité presque illimitée,
   - naturellement résistant au feu, et ne dégage pas de gaz toxiques en cas de combustion.

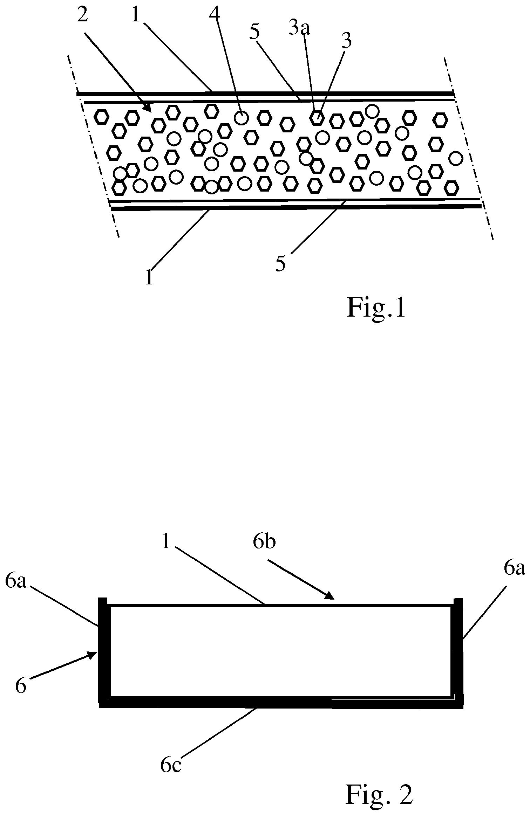

La housse externe 1 est prévue pour être perméable à l'air. D'autre part, conformément à la présente invention, la structure de remplissage 2, comme on peut le voir sur la figure 1, comprend en outre des éléments 4 répulsifs, tels que des billes de cèdre ou des granulés de cèdre, réparties en vrac avec les granulés de liège 3 et capables d'exercer un effet répulsif contre les parasites, notamment les puces. De tels granulés 3 de liège, avec leur caractère anguleux ou non lisse ou non rond, sont aptes à coopérer, par effet de friction ou de frottement, avec lesdits éléments, lors des mouvements de l'animal sur le coussin, ladite coopération activant ou renforçant l'activation de l'effet répulsif ou des vertus répulsives des éléments répulsifs tels que les billes de cèdres.

Le choix des billes de cèdre 4 par les déposants c'est-à-dire de billes de bois de cèdre, plutôt que du cèdre sous forme d'huile essentielle permet d'écarter ou de limiter les risques d'irritation de la peau de l'animal. En effet, l'utilisation de cèdre sous la forme d'une huile essentielle est connue pour provoquer, notamment dans des concentrations élevées, des irritations de la peau. La diffusion des composants volatiles du cèdre reste limitée à l'environnement immédiat du coussin, sans contact direct avec la peau de l'animal et à des degrés de concentration inoffensifs pour les animaux, notamment les chiens et les chats, et néanmoins efficaces.

Ainsi la combinaison des effets naturellement antipuces et antimites du cèdre et du liège permet de renforcer, sans porter atteinte à la santé de l'animal ou à l'environnement, l'effet assainissant du coussin.

D'autre part, comme on peut le voir aussi sur la figure 1, la présente invention peut prévoir que le coussin puisse comprendre en outre une housse interne 5, le cas échéant perméable à l'air, entourant totalement la structure de remplissage 2 entre la housse externe 1 et cette dernière et en ce que la housse externe 1 puisse être amovible. Dans ce cas la housse externe 1 peut être prévue pour entourer partiellement la structure de remplissage 2, c'est-à-dire en entourant partiellement la housse interne 5 du côté prévu pour recevoir l'animal, puisque la structure de remplissage 2 est maintenu dans la housse interne 5.

L'utilisation d'une double housse ou enveloppe externe et interne 1, 5 permet de pouvoir enlever la housse externe 1 amovible en contact avec l'animal pour la laver, tout en maintenant et protégeant la structure de remplissage dans une enveloppe fermée.

De préférence, l'épaisseur de la housse externe 1 peut être supérieure à celle de la housse interne 5.

La housse interne 5 peut être réalisée à partir d'un tissu à maille extensible, de préférence un tissu à maille extensible dans les deux sens de la maille connu sous la dénomination anglaise de « bi-stretch ».

Dans une forme de réalisation préférentielle de la housse externe 1, celle-ci peut être réalisée à partir d'un tissu à maille serrée et extensible. De préférence, le tissu à maille serrée et extensible peut être un tissu extensible dans les deux sens (bi-stretch) de la maille. Un tel tissu à maille serrée et extensible peut être un tissu utilisé pour les vêtements sportifs techniques, de préférence de constitution plus épaisse que celle du tissu utilisé pour la housse interne car il doit pouvoir résister au contact avec l'animal (frottements, morsures...). En effet, lors d'essais réalisés par les déposants il a été constaté que plus la maille est serrée et extensible, moins elle offre de prise aux crocs de l'animal et notamment du chien et que, parallèlement, plus la maille est extensible, moins la traction exercée par le chien est efficace. En effet, pour réussir à déchirer le coussin, le chien doit se servir de ses pattes avant pour bloquer le coussin pendant qu'il tracte le tissu avec sa gueule et le fait que le tissu soit extensible lui rend la tâche plus compliquée. En effet, l'élasticité du tissu rend plus difficile la pénétration des crocs de l'animal et oppose une moindre résistance à la traction ce qui retarde, voire empêche la déchirure initiale, puisque l'animal se fatigue avant qu'il ne parvienne à ses fins.

On comprendra que la housse interne 5 qui n'est pas en contact avec l'animal ne nécessite pas un effet de résistance, contrairement à la housse externe 1 dont la résistance est procurée par la maille serrée, mais au moins un effet extensible pour permettre une déformation satisfaisante du coussin. La maille du tissu de la housse interne 5 peut être prévue en fonction de la taille des granulés de liège 3 et, le cas échéant, des éléments répulsifs 4, de sorte à empêcher que ces derniers ne passent au travers de la maille.

Le tissu extensible à maille serrée utilisé pour la housse externe 1 peut comprendre un traitement de surface spécifique lui conférant des caractéristiques de déperlance limitant les infiltrations de liquide (eau, urine, huile, saletés...) pouvant survenir. On rappellera que l'huile produite par la peau de l'animal véhicule des bactéries responsables des odeurs et le fait que le tissu extensible soit ainsi traité permet d'empêcher ou de limiter la pénétration de l'huile au coeur de la fibre supprimant ou réduisant d'autant l'imprégnation des odeurs de l'animal dans le tissu et partant dans la housse externe 1.

Le fait que la housse externe 1 et, le cas échéant, la housse interne 5 soient chacune perméable à l'air ou respirable permet le passage à travers ces dernières des propriétés assainissantes et/ou répulsives, plus particulièrement sous forme de vapeurs ou d'effluves, du liège et du cèdre afin qu'elles puissent bénéficier à l'animal et à l'environnement.

La housse externe 1 amovible peut être prévue pour être lavable en machine afin d'offrir au maître de l'animal une facilité d'entretien et une bonne conservation du coussin dans le temps.

Ainsi, un tel coussin selon la présente invention permet de répondre parfaitement et efficacement aux impératifs d'équilibre et de santé de l'animal, tant sur le plan fonctionnel (préservation des articulations...), psychologique (réduction du niveau de stress...) que biologique (réduction des bactéries, des toxines, de la propagation parasitaire, fongique...), tout en apportant un confort à son maître par la réduction des odeurs et la facilité d'entretien.

Si on se réfère maintenant à la figure 2, on peut voir que la présente invention a également pour objet un ensemble composé d'un coussin et d'un bac, ou d'un panier, formant rebord, ledit coussin étant défini selon la présente invention.

Conformément à la présente invention, dans un tel ensemble, le bac 6 comprend une paroi latérale 6a définissant un espace interne 6b et en ce que le coussin est disposé dans l'espace interne 6b du bac 6 de sorte que la paroi latérale 6a de ce dernier forme un rebord périphérique audit coussin.

Le bac 6 peut comprendre un fond 6c (figure 2) ou être sans fond.

Le bac 6 peut être réalisé de préférence en feuille de liège. Il peut également être formé à partir d'une coque thermoformée.

Un tel ensemble qui permet de créer un rebord au niveau du coussin est plus particulièrement adapté pour les petits animaux tels que les petits chiens qui peuvent alors se caler contre ledit rebord directement ou par l'intermédiaire de la partie du coussin correspondante venant en appui contre ledit rebord ou recouvrant ce dernier.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention. Par exemple la présente invention pourrait prévoir d'autres éléments que les granulés de liège présentant un profil et/ou une granulométrie et/ou une densité similaires, ce sans sortir du cadre de la présente invention.

## Revendications

1. Coussin pour animaux domestiques comprenant une housse externe (1) formant une enveloppe externe prévue pour être en contact avec l'animal et une structure de remplissage (2) entourée et recouverte partiellement ou totalement par ladite housse,
- la structure de remplissage (2) comprenant des granulés de liège (3) répartis en vrac et présentant chacun un profil anguleux ou non lisse ou non rond permettant à l'animal de façonner naturellement et instantanément dans le coussin une empreinte provisoire adaptée à sa morphologie et à ses contours pour se caler dans cette dernière,
- la housse externe (1) étant perméable à l'air et
**caractérisé en ce que** la structure de remplissage (2) comprend en outre des éléments (4) répulsifs, tels que des billes de cèdre ou des granulés de cèdre, répartis en vrac avec les granulés de liège (3) et capables d'exercer un effet répulsif contre les parasites
et **en ce que** les granulés de liège (3), avec leur caractère anguleux ou non lisse ou non rond, sont aptes à coopérer, par effet de friction ou de frottement, avec lesdits éléments, lors des mouvements de l'animal sur le coussin, ladite coopération activant ou renforçant l'activation de leur effet répulsif.

2. Coussin, selon, la revendication 1, **caractérisé en ce que** la densité des granulés de liège est comprise entre 50 et 70 kg/m3, préférentiellement entre 55 et 65 kg/m3 et plus préférentiellement de l'ordre de 60 kg/m3.

3. Coussin, selon la revendication 1 ou la revendication 2, **caractérisé en ce que** les granulés de liège ont une granulométrie comprise entre 0,5 mm et 3,5 mm, préférentiellement entre 1 mm et 2 mm.

4. Coussin, selon l'une quelconque des revendications 1 à 3, **caractérisé en ce qu'**il comprend en outre une housse interne (5), le cas échéant perméable à l'air, entourant totalement la structure de remplissage (2) entre la housse externe (1) et cette dernière et **en ce que** la housse externe (1) est amovible.

5. Coussin, selon la revendication 4, **caractérisé en ce que** la housse interne (5) est réalisée à partir d'un tissu en maille extensible, de préférence dans les deux sens de la maille.

6. Coussin, selon la revendication 4, **caractérisé en ce que** l'épaisseur de la housse externe (1) est supérieure à celle de la housse interne (5).

7. Coussin, selon l'une quelconque des revendications 1 à 6, **caractérisé en ce que** la housse externe (1) est réalisée à partir d'un tissu à maille serrée et extensible, de préférence dans les deux sens de la maille.

8. Coussin, selon la revendication 7, **caractérisé en ce que** le tissu extensible à maille serrée comprend un traitement de surface spécifique lui conférant des caractéristiques de déperlance limitant les infiltrations de liquide.

9. Ensemble composé d'un coussin et d'un bac formant rebord, ledit coussin étant défini selon l'une quelconque des revendications 1 à 8, **caractérisé en ce que** le bac (6) comprend une paroi latérale (6a) définissant un espace interne (6b) et **en ce que** le coussin est disposé dans l'espace interne (6b) du bac (6) de sorte que la paroi latérale (6a) de ce dernier forme un rebord périphérique audit coussin.

## Patentansprüche

1. Kissen für Haustiere, umfassend einen äußeren Bezug (1), der eine äußere Hülle bildet, die dazu vorgesehen ist, mit dem Tier in Kontakt zu stehen, und eine Füllstruktur (2), die vom Bezug umgeben und teilweise oder vollständig bedeckt ist,
- wobei die Füllstruktur (2) Korkgranulat (3) umfasst, das ein eckiges oder nicht glattes oder nicht rundes Profil aufweist, das es dem Tier ermöglicht, auf natürliche und unmittelbare Weise einen vorübergehenden Abdruck im Kissen zu formen, der an seine Morphologie und Konturen angepasst ist, um sich darin niederzulassen,
- wobei der äußere Bezug (1) luftdurchlässig ist,
und **dadurch gekennzeichnet, dass** die Füllstruktur (2) ferner Abwehrelemente (4) wie Zedernholzkugeln oder Zedernholzgranulat umfasst, die lose im Korkgranulat (3) verteilt und dazu in der Lage sind, eine schädlingsbekämpfende Wirkung auszuüben, und dass das Korkgranulat (3) mit seiner eckigen, nicht glatten oder nicht runden Eigenschaft dazu geeignet ist, bei Bewegungen des Tiers auf dem Kissen durch eine Reib- oder Scheuerwirkung mit den Elementen zusammenzuwirken, wobei dieses Zusammenwirken die Aktivierung ihrer abwehrenden Wirkung aktiviert oder verstärkt.

2. Kissen nach Anspruch 1, **dadurch gekennzeichnet, dass** die Dichte des Korkgranulats zwischen 50 und 70 kg/m³, vorzugsweise zwischen 55 und 65 kg/m³, beträgt und besonders vorzugsweise in der Größenordnung von 60 kg/m³ liegt.

3. Kissen nach Anspruch 1 oder Anspruch 2, **dadurch gekennzeichnet, dass** das Korkgranulat eine Korngröße zwischen 0,5 mm und 3,5 mm, vorzugsweise zwischen 1 mm und 2 mm, aufweist.

4. Kissen nach einem der Ansprüche 1 bis 3, **dadurch gekennzeichnet, dass** es ferner einen inneren, gegebenenfalls luftdurchlässigen Bezug (5) umfasst, der die Füllstruktur (2) zwischen dem äußeren Bezug (1) und selbiger vollständig umgibt, und dass der äußere Bezug (1) abnehmbar ist.

5. Kissen nach Anspruch 4, **dadurch gekennzeichnet, dass** der innere Bezug (5) aus einem vorzugsweise in beiden Maschenrichtungen dehnbaren Maschengewebe hergestellt ist.

6. Kissen nach Anspruch 4, **dadurch gekennzeichnet, dass** die Dicke des äußeren Bezugs (1) größer als die des inneren Bezugs (5) ist.

7. Kissen, nach einem der Ansprüche 1 bis 6, **dadurch gekennzeichnet, dass** der äußere Bezug (1) aus einem vorzugsweise in beiden Maschenrichtungen dehnbaren engmaschigen Gewebe hergestellt ist.

8. Kissen nach Anspruch 7, **dadurch gekennzeichnet, dass** das dehnbare Maschengewebe eine spezifische Oberflächenbehandlung umfasst die ihm wasserabweisende Eigenschaften verleiht, die das Eindringen von Flüssigkeit begrenzen.

9. Anordnung aus einem Kissen und einer Schale, die einen Rand bildet, wobei das Kissen nach einem der Ansprüche 1 bis 8 definiert ist, **dadurch gekennzeichnet, dass** die Schale (6) eine Seitenwand (6a) umfasst, die einen Innenraum (6b) definiert, und dass das Kissen so im Innenraum (6b) der Schale (6) angeordnet ist, dass ihre Seitenwand (6a) einen um das Kissen herum verlaufenden Rand bildet.

## Claims

1. Cushion for domestic animals, comprising an external cover (1) forming an external envelope designed to be in contact with the animal and a filling structure (2) surrounded and covered partially or completely by said cover,
- the filling structure (2) comprising cork granules (3) distributed loose and each having an angular or non-smooth or non-round profile allowing the animal to naturally and instantaneously fashion, in the cushion, a temporary imprint adapted to its morphology and its contours so as to settle into the latter,
- the external cover (1) being permeable to the air,
and **characterized in that** the filling structure (2) also comprises repellent elements (4), such as cedar balls or cedar granules, distributed loose with the cork granules (3) and capable of exerting a repellent effect against parasites and **in that** the cork granules (3), with their angular or non-smooth or non-round nature, are able to cooperate, by friction or rubbing effect, with said elements, during the movements of the animal on the cushion, said corporation activating or reinforcing the activation of their repellent effect.

2. Cushion according to Claim 1, **characterized in that** the density of the cork granules is between 50 and 70 kg/m³, preferentially between 55 and 65 kg/m³, and more preferentially of the order of 60 kg/m³.

3. Cushion according to Claim 1 or Claim 2, **characterized in that** the cork granules have a particle size of between 0.5 mm and 3.5 mm, preferentially between 1 mm and 2 mm.

4. Cushion according to any one of Claims 1 to 3, **characterized in that** it also comprises an internal cover (5), if appropriate permeable to the air, completely surrounding the filling structure (2) between the external cover (1) and the latter, and **in that** the external cover (1) is removable.

5. Cushion according to Claim 4, **characterized in that** the internal cover (5) is made from a knitted stretch fabric, preferably with two-way stretch.

6. Cushion according to Claim 4, **characterized in that** the thickness of the external cover (1) is greater than that of the internal cover (5).

7. Cushion according to any one of Claims 1 to 6, **characterized in that** the external cover (1) is made from a tightly knitted stretch fabric, preferably with two-way stretch.

8. Cushion according to Claim 7, **characterized in that** the tightly knitted stretch fabric comprises a specific surface treatment providing it with water-repellency characteristics limiting the ingress of liquid.

9. Assembly made up of a cushion and a tray forming a surround, said cushion being defined according to any one of Claims 1 to 8, **characterized in that** the tray (6) comprises a lateral wall (6a) defining an internal space (6b) and **in that** the cushion is disposed in the internal space (6b) of the tray (6) such that the lateral wall (6a) of the latter forms a surround that is peripheral to said cushion.
